# EUROPÄISCHE PATENTSCHRIFT

(11) **EP 1 377 818 B1**
(45) Veröffentlichungstag und Bekanntmachung des Hinweises auf die Patenterteilung: **26.03.2008**
(21) Anmeldenummer: 02716630.5
(22) Anmeldetag: 27.02.2002
(51) Int. Cl.: G01N 27/419

(54) **VERFAHREN UND VORRICHTUNG ZUR ERFASSUNG DER KONZENTRATION EINER SAUERSTOFFHALTIGEN VERBINDUNG IN EINEM MESSGAS**
METHOD AND DEVICE FOR DETECTING THE CONCENTRATION OF AN OXYGEN-CONTAINING COMPOUND IN AN ANALYTE GAS
PROCEDE ET DISPOSITIF DE DETECTION DE LA CONCENTRATION D'UN COMPOSE CONTENANT DE L'OXYGENE DANS UN GAZ DE MESURE

(30) Priorität: 31.03.2001 DE 10116184
(43) Veröffentlichungstag der Anmeldung: 07.01.2004
(73) Patentinhaber: ROBERT BOSCH GMBH, 70442 Stuttgart (DE)
(72) Erfinder: CRAMER, Berndt, 71229 Leonberg (DE); SCHUMANN, Bernd, 71277 Rutesheim (DE)
(86) Internationale Anmeldenummer: PCT/DE2002/000724
(87) Internationale Veröffentlichungsnummer: WO 2002/079769

(56) Entgegenhaltungen:
- EP-A- 0 392 447
- EP-A- 0 678 740
- WO-A-99/57556

## Beschreibung

### Stand der Technik

Die Erfindung betrifft die Erfassung der Konzentration einer bestimmten sauerstoffhaltigen Verbindung in einem Messgas, das noch weitere sauerstoffhaltige Verbindungen enthält.

Als Meßgas ist insbesondere das Abgas eines Verbrennungsmotors von Interesse. Die bestimmte sauerstoffhaltige Verbindung, deren Konzentration erfasst werden soll, kann Stickoxid sein. Als weitere sauerstoffhaltige Verbindungen kommen insbesondere molekularer Sauerstoff, Kohlenmonoxid, Kohlendioxid und Wasser in Frage.

Aus dem SAE Paper 960334 und aus der EP 678 740 ist bereits ein NOx-Sensor mit zwei Kammern bekannt, die von einem ionenleitfähigem Festelektrolyten begrenzt werden. Die erste Kammer steht über eine erste Diffusionsbegrenzung mit dem Meßgas in Verbindung. Die erste und eine zweite Kammer sind untereinander durch eine weitere Diffusionsbegrenzung verbunden. Die Konzentration von Sauerstoff in der ersten Kammer wird durch eine erste elektrolytische Sauerstoffpumpzelle auf einen vorbestimmten Wert verringert.

Dazu wird über Elektroden eine Pumpspannung an den Elektrolyten so angelegt, dass das resultierende elektrische Feld im Elektrolyten einen Strom von Sauerstoffionen aus der Kammer heraus antreibt. Dabei läßt sich durch passende Wahl der physikalischen Bedingungen wie
- der Temperatur,
- der selektiv katalytischen Wirkung des Elektrodenmaterials sowie
- der Pumpspannung
erreichen, dass die bestimmte sauerstoffhaltige Verbindung (zum Beispiel NOx), deren Konzentration erfasst werden soll, keinen Beitrag zum Sauerstoffpumpstrom aus der ersten Kammer liefert. Wenn beispielsweise Stickoxide die bestimmte sauerstoffhaltige Verbindung darstellen, lassen sich die genannten physikalischen Bedingungen so vorgeben, dass eine Zersetzung in Stickstoff und Sauerstoff an der Elektrode der ersten Kammer nicht auftritt. Sauerstoff aus dieser Verbindung kann dann auch nicht abgepumpt werden und damit keinen Beitrag zum Sauerstoffpumpstrom der ersten Kammer liefern.

In der zweiten Kammer verringert eine zweite elektrolytische Pumpzelle die Sauerstoffkonzentration weiter. Bei abnehmender Sauerstoffkonzentration hat dies eine Trennung der Stickoxide in Sauerstoff und Stickstoff zur Folge. Die Stärke des Pumpstroms in der zweiten Kammer wird als Maß für die NOx-Konzentration im Meßgas benutzt. Das Prinzip dieses Sensors beruht darauf, dass das Abpumpen von Sauerstoff aus der zweiten Kammer das Gleichgewicht der Reaktionen NO <-> 1/2N2 + 1/2 02 stört und die rechte Seite der Gleichung begünstigt.

Da beim Sauerstoffpumpvorgang NO in der zweiten Kammmer zerlegt wird, speisen auch die NOx-Verbindungen den Pumpstrom der zweiten Kammer. Weil außerdem die 02-Konzentration durch die vorgeschaltete erste Pumpzelle als bekannt und konstant angenommen wird, kann die NOx-Menge im Meßgas prinzipiell durch die Stärke des Pumpstroms aus der zweiten Kammer bestimmt werden.

Sensoren nach dem Stand der Technik weisen einen Offset, eine Drift und eine starke Temperaturabhängigkeit des Pumpstroms auf. Diese Nachteile basieren auf folgenden Ursachen:

Durch die elektronische Restleitfähigkeit von Sauerstoff leitenden Festelektrolyten sowie durch Seebeckspannungen und elektrische Feld- und Stromverkopplung entstehen Offsetgrößen im Stickoxid-Messsignal auch in Abwesenheit von Stickoxiden. Durch Gefügeveränderungen während des Betriebs verändern sich die elektrischen Eigenschaften des Festelektrolyten derart, dass eine Drift sowohl in der Signalamplitude als auch in der Signalnulllage auftritt.

Vor diesem Hintergrund besteht die Aufgabe der Erfindung in einer Minimierung des Offsets, der Altersdrift und der Temperaturabhängigkeit des Signals für die gesuchte Konzentration der bestimmten sauerstoffhaltigen Verbindung.

Die gewünschten Wirkungen werden durch die Merkmale der unabhängigen Ansprüche erreicht.

Ein Verfahren bzw. eine Vorrichtung gemäß dem Oberbegriff des unabhängigen Anspruchs 1 bzw. 8 ist aus der Druckschrift WO 99/57556 A bekannt. Außerdem wurde der Pendelbetrieb einer Sauerstoffelektrode bezüglich der Pumpspannung in EP 0 392 447 A vorgeschlagen.

Im Einzelnen wird bei einem verfahren zur Ermittlung der Konzentration einer sauerstoffhaltigen Verbindung in einem Meßgas in einem externen Volumen, das auch weiteren Sauerstoff enthält, ein Sensor mit einer ersten Kammer verwendet, die mit dem externen Volumen über eine erste Diffusionsbarriere verbunden ist und die mit einer zweiten Kammer über eine weitere Diffusionsbarriere verbunden ist.

Weiter sind Mittel zur Verringerung der Sauerstoffkonzentration in der ersten Kammer und Mittel zur Erfassung der Konzentration von Sauerstoff in der zweiten Kammer vorgesehen. Erfindungsgemäß erfolgt die Verringerung der Sauerstoffkonzentration in der ersten Kammer in einer ersten Phase auf einen Wert, bei dem eine Veränderung der Konzentration der sauerstoffhaltigen Verbindung nicht eintritt und weiter erfolgt in einer zweiten Phase eine weitere Verringerung in der ersten Kammer auf einen Wert, bei dem auch eine Verringerung der Konzentration der 1. sauerstoffhaltigen Verbindung eintritt. Das genannte Maß für die gesuchte Konzentration wird als Differenz der in der 1. und 2. Phase in der zweiten Kammer erfassten Sauerstoffkonzentrationen gebildet.

Im Gegensatz zu Auswerteverfahren, die aus dem Stand der Technik bekannt sind und bei denen die Spannung der Pumpelektrode der ersten Kammer auf einen festen Wert gegenüber der Luftreferenzelektrode geregelt wird, erfolgt erfindungsgemäß eine Umsteuerung abwechselnd zwischen zwei Werten U_{IPE_H}, U_{IPE_L}.

Der Pumpstrom der zweiten Kammer wird sowohl bei U_{IPE_H} als auch bei U_{IPE_L} aufgenommen. Als Maß für die gesuchte Konzentration der bestimmten sauerstoffhaltigen Verbindung wird die Differenz der Pumpströme der zweiten Kammer bei U_{IPE_H} und U_{IPE_L} gebildet.

Die erfindungsgemäße Bildung der Differenz der bei zwei verschiedenen Pumpspannungen aufgenommenen Werte des Pumpstroms aus der zweiten Kammer bewirkt die angestrebte Minimierung des Offsets, der Altersdrift und der Temperaturabhängigkeit. Die Differenzbildung bewirkt gewissermaßen einen Nullabgleich des Pumpstroms der zweiten Kammer. Mit anderen Worten läßt sich das erfindungsgemäße Verfahren auch als Pendelbetrieb der ersten Sauerstoffpumpelektrode bezüglich der Pumpspannung bezeichnen. Der erfindungsgemäße Pendelbetrieb ermöglicht die offset- und driftarme Messung aufgrund eines ständigen Nullabgleichs.

Dadurch stellen sich die folgenden Vorteile ein:

Temperaturveränderungen im Sensor wirken ähnlich auf Signalgröße und Nulllage, so dass durch das Pendelverfahren eine Verringerung des Temperaturkoeffizienten des Stickoxidsignals erreicht wird.

Bei den Signalfehlern, die aus der Strom- und Feldverkopplung resultieren, wird die Verbesserung noch größer, da die Fehler fast identisch in Signalgröße und Nulllage auftreten.

Durch das ständige Bestimmen der Nulllage verliert die Drift der Nulllage vollständig an Bedeutung.

Impulsförmige Störungen, die z.B. aus hochfrequenten Einkopplungen stammen, können durch einen Gültigkeitstest der Messwerte stark reduziert werden.

Im folgenden werden Ausführungsbeispiele der Erfindung mit Bezug auf die Figuren erläutert.

Fig. 1 zeigt einen Doppelkammer-NOx-Sensor, wie er zur Durchführung des erfindungsgemäßen Verfahrens geeignet ist.

Fig. 2 zeigt eine Schaltung zum erfindungsgemäßen Betrieb des Sensors.

Fig. 3 offenbart zeitliche Verläufe von Signalen, wie sie bei Durchführung des erfindungsgemäßen Verfahrens auftreten.

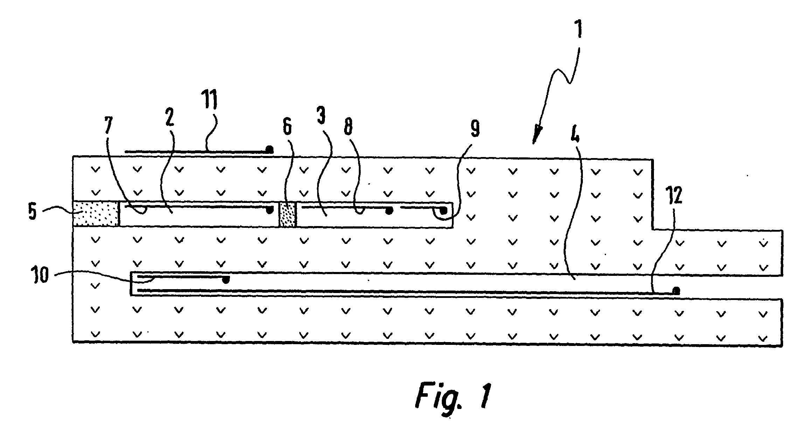

Die Ziffer 1 in der Fig. 1 bezeichnet einen Festelektrolyten mit drei Kammern 2, 3, und 4, Diffusionsbarrieren 5 und 6 sowie Elektroden 7 bis 11 und einem Heizer 12.

Die erste Kammer 2 ist über die Diffusionsbarriere 5 mit dem Abgas und über die zweite Diffusionsbarriere 6 mit der zweiten Kammer 3 verbunden. Die erste oder die zweite Kammer können ihrerseits aus mehreren Kammern bestehen. Die dritte Kammer 4 steht über einen Kanal nur in Verbindung mit der Luft und enthält die Luftreferenzelektrode 10.

Die Sauerstoffpumpelektrode 7 dient als negative Elektrode der Sauerstoffpumpe der ersten Kammer.

Die Elektrode 8 dient als negative Elektrode der Sauerstoffpumpe der zweiten Kammer. Wie weiter oben beschrieben, kann der Pumpstrom unter bestimmten Bedingungen als Maß für die gesuchte Konzentration der Stickoxide oder einer anderen sauerstoffhaltigen Verbindung dienen.

Zusätzlich zur Elektrode 8 kann in der zweiten Kammer eine weitere Pumpelektrode 9 vorgesehen sein, deren Material beispielsweise die Zersetzung von Stickoxiden begünstigt.

Als positive Gegenelektrode für den Sauerstoffpumpvorgang dient jeweils eine im direkten Vergleich positivere Elektrode. Dies kann beispielsweise die äußere Pumpelektrode 11 sein.

An der Pumpelektrode 9 kann der Pumpstrom des Stickstoffs gemessen werden.

Die Pumpelektrode 9 besitzt das negativste Potential. Daher kommt für diese Elektrode jede andere Elektrode als Gegenelektrode in Frage. Dies können, je nach Feldgeometrie im Festelektrolyten, auch mehrere der anderen positiveren Elektroden sein.

Ein isolierter Heizer 12 bringt den Sensor auf die nötige Betriebstemperatur.

Der dargestellte Sensor ermöglicht folgende Funktionen:

Meßgas gelangt über die erste Diffusionsbarriere 5 in die erste Kammer 2. Das Meßgas enthält neben molekularem Sauerstoff wenigstens eine sauerstoffhaltige Komponente, deren Konzentration im Meßgas bestimmt werden soll. Stickoxide stellen ein Beispiel einer solchen sauerstoffhaltigen Komponente dar.

Jede der Elektroden 7, 8 und 9 bildet jeweils in Verbindung mit einer positivereren Elektrode und dem jeweils zwischen den Elektroden liegenden ionenleitenden Festelektrolyten eine Sauerstoffpumpe. Als positivere Gegenelektrode kommt insbesondere die Elektrode 11 in Frage.

Eine Potentialdifferenz zwischen den Elektroden erzeugt ein elektrisches Feld im Elektrolyten, das den Sauerstoffionenpumpstrom treibt.

Durch Auswahl eines passenden Elektrodenmaterials kann bspw. die Dissoziierung von Sauerstoffmolekülen gegenüber der Trennung anderer sauerstoffhaltiger Verbindungen bevorzugt werden.

Wenn beispielsweise die Konzentration von Stickoxiden erfaßt werden soll, ist es vorteilhaft, wenn die Sauerstoffpumpelektrode 7 die Dissoziierung von Sauerstoff, nicht aber von Stickoxid begünstigt.

Dagegen sollte die NO-Pumpelektrode 9 in diesem Anwendungsfall eine Stickoxide zersetzende Wirkung besitzen.

Die Sauerstoffpumpe der ersten Kammer reduziert den Sauerstoffgehalt des Meßgases in der ersten Kammer durch Abpumpen von Sauerstoffionen, die aus molekularem Sauerstoff, nicht aber aus der wenigstens einen sauerstoffhaltigen Komponente stammen.

Bei Sensoren nach dem Stand der Technik wird dazu das Potenzial der äußeren Pumpelektrode auf einen festen Wert gegenüber der Luftreferenzelektrode geregelt. Je höher die Potenzialdifferenz ist, desto geringer wird die Sauerstoffkonzentration, die sich in der ersten Kammer einstellt. Der feste Wert ist bei den Sensoren nach dem Stand der Technik so vorbestimmt, das der in der ersten Kammer verbleibende Sauerstoffgehalt nicht gegen Null geht. Dadurch wird eine Zersetzung von Stickoxiden in der ersten Kammer vermieden.

Dagegen verwendet die Erfindung wenigstens zwei Potenzialwerte für die äußere Pumpelektrode, zwischen denen im Betrieb des Sensors umgesteuert wird.

Das Meßgas mit reduziertem Sauerstoffgehalt gelangt über eine zweite Diffusionsbarriere in die zweite Kammer. Dort wird weiterer Sauerstoff abgepumpt, so dass bei sinkendem Sauerstoffgehalt in der zweiten Kammer auch die wenigstens eine sauerstoffhaltige Komponente als den Pumpstrom speisende Quelle aktiviert wird. Der resultierende Pumpstrom wird als Maß für die gesuchte Konzentration der bestimmten sauerstoffhaltigen Verbindung erfaßt.

Zum erfindungsgemäßen Betrieb des Sensors ist eine Auswerteschaltung erforderlich, die verschiedene elektrische Spannungen bereitstellt und die das Meßsignal aus einer Strommessung gewinnt.

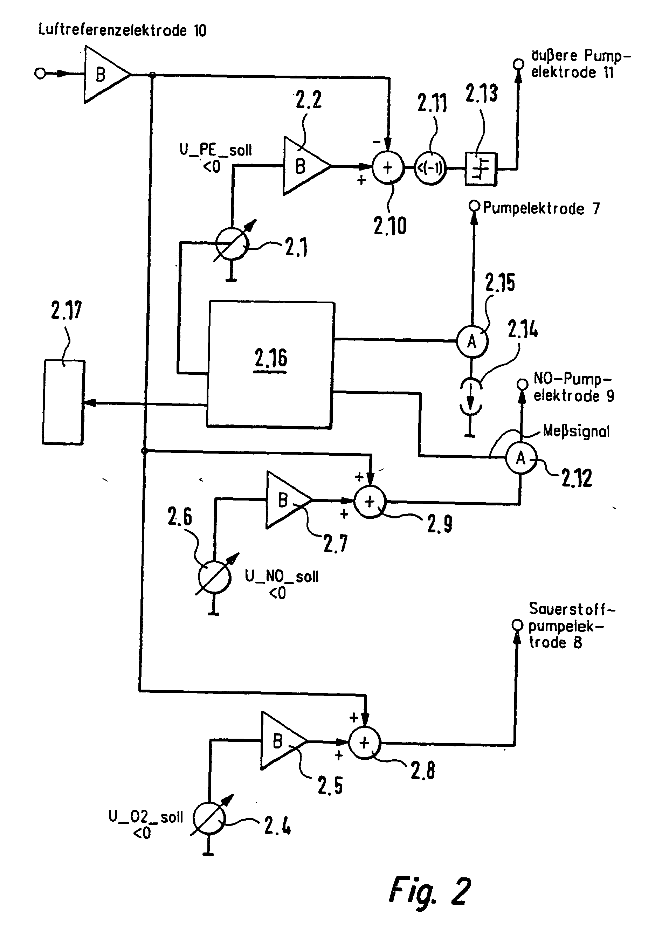

Das Blockschaltbild einer Auswerteschaltung ist in Fig. 2 dargestellt.

Die Sauerstoffpumpelektrode 7 in der ersten Kammer liegt gewissermaßen auf einer virtuellen Masse. Diese wird durch eine Stromquelle 2.14 gebildet, die einen sehr kleinen Innenwiderstand hat. Die Stromquelle 2.14 ersetzt die negative Ladung, die von der Pumpelektrode 7 durch die Sauerstoffionenleitung durch den Festelektrolyten zur positiven Elektrode 11 abfließt. Der vom Strommeßgerät 2.15 erfaßte Pumpstrom der ersten Kammer steigt mit steigender Sauerstoffkonzentration im externen Volumen an. Er kann daher als Maß für die Sauerstoffkonzentration verwendet werden und damit beispielsweise zur Regelung des Kraftstoff/Luftverhältnisses für den Betrieb eines Verbrennungsprozesses verwendet werden.

Die Gegenelektrode 11 wird auf ein gegenüber Masse positives Potenzial angehoben, wobei es über die Verknüpfung 2.10 noch um das Potenzial der Luftreferenzelektrode 10 verschoben ist. Die Invertierung des negativ bereitgestellten Potenzials (U IPE-soll - Potenzial der Luftreferenzelektrode) im Block 2.11 bewirkt im Rahmen des dargestellten Ausführungsbeispiels, dass die äußere Sauerstoffpumpelektrode 11 im Vergleich zur Sauerstoffpumpelektrode 7 positiv ist.

Das Potenzial U_IPE_soll wird über eine Spannungsreferenz 2.1 in Verbindung mit einem Operationsverstärker 2.2 generiert und über einen Regler 2.13 eingestellt.

Die Spannungen für die in der Kammer 2 liegenden Elektroden 8 und 9 werden über Spannungsreferenzen 2.4 und 2.6 und Operationsverstärker 2.5 und 2.7 generiert. Dabei bezeichnet U_02_So11 < Null die Spannungsreferenz für die Sauerstoffpumpelektrode 8 und U_NO_Soll < Null die Spannungsreferenz für die NO-Pumpelektrode 10.

Auch die Potenziale der Elektroden 8 und 9 werden durch die Verknüpfungen 2.8 und 2.9 um das Potenzial der Luftreferenz verschoben.

Die anderen Elektrodenpotentiale werden direkt gestellt. Der NO-Pumpstrom kann über bekannte Stromspannungswandlung vermessen werden. Diese Funktion wird durch das Strommeßgerät 2.12 repräsentiert.

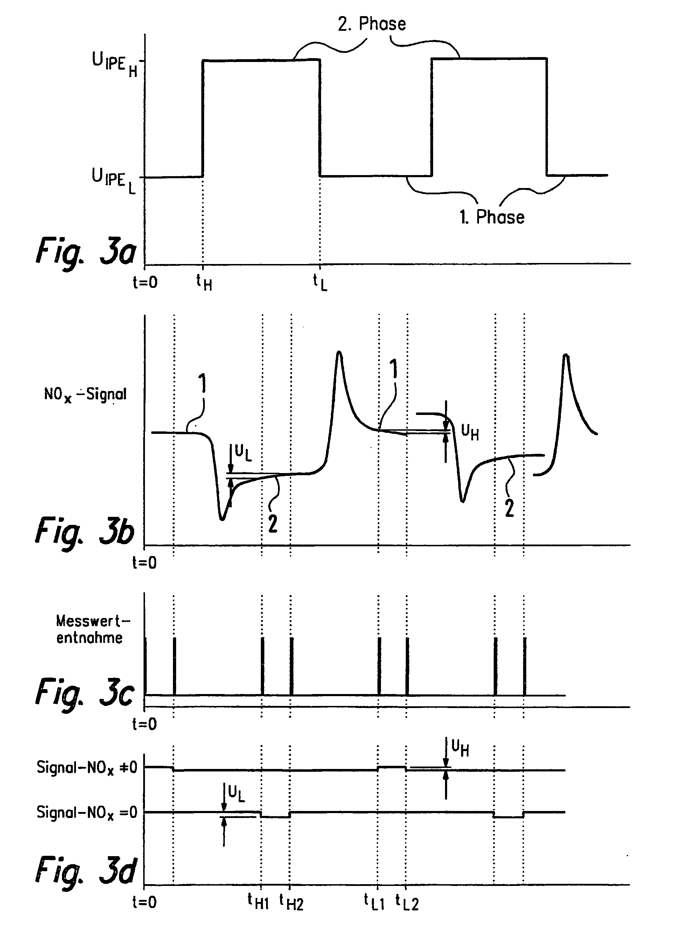

Erfindungsgemäß ist U_IPE-soll nicht etwa konstant, sondern wird zwischen zwei Spannungswerten U_{IPE_H} und U_{IPE_L} hin und her pendelnd umgesteuert. Die Steuerung erfolgt durch einen Steuerchip 2.16, der zumindest einen Prozessor und einen Programm- und Datenspeicher besitzt. Ein möglicher zeitlicher Verlauf von U_IPE-Soll bei einer als Ausführungsbeispiel zu betrachtenden Umsteuerung ist in Fig. 3 a dargestellt. Fig. 3 b zeigt den korrespondierenden Verlauf des Pumpstroms der zweiten Kammer, wie er vom Strommessgerät 2.12 erfasst und an den Steuerchip 2.16 weitergegeben wird. Einem Ausführungsbeispiel entsprechend ist dieses Signal in der Fig. 3 b als NOx-Signal bezeichnet. Wenn diese Bezeichnung im folgenden weiter verwendet wird, steht sie gewissermaßen stellvertretend für beliebige andere sauerstoffhaltige Verbindungen, die sich durch das beschriebene Mehrkammerprinzip von anderen sauerstoffhaltigen Verbindungen meßtechnisch unterscheiden lassen.

Die niedrigere Spannung U_{IPE_L} in Fig. 3 a entspricht dabei der Spannung, die aus dem Stand der Technik für den eingeregelten Zustand der ersten Sauerstoffpumpelektrode bekannt ist.

Diese Spannung zeichnet sich unter anderem dadurch aus, das die Sauerstoffkonzentration in der ersten Kammer zwar einerseits verringert wird, andererseits aber eine Restsauerstoffkonzentration aufrechterhalten bleibt, bei der eine Zersetzung von NOx noch nicht eintritt.

Die Stickoxide diffundieren daher weiter in die zweite Kammer, werden dort zersetzt und rufen dadurch das NOx-Signal mit dem Niveau 1 in Fig. 3 b hervor.

Die Sauerstoffpumpelektroden der ersten Kammer können bei höherer Spannung neben Sauerstoff aus O₂ auch Sauerstoff aus H₂O, CO und NO sowie aus NO₂ abpumpen.

U_{IPE_H} wird nun so hoch gewählt, dass die Pumpelektrode der ersten Kammer neben dem Sauerstoff des Abgases auch den Sauerstoff der in den Stickoxiden gebunden ist, abpumpt, beispielsweise 500 bis 1000 mV, besonders aber 600 bis 850 mV.

Der Stickoxidanteil in der ersten Kammer geht dann gegen Null, so dass in der Folge die Nachlieferung von Stickoxiden von der 1. Kammer zur 2. Kammer ausbleibt.

Da auch in der 2. Kammer Sauerstoff aus Stickoxiden für die Messung abgepumpt wird, sinkt die Stickoxidkonzentration in der 2. Kammer wegen der ausbleibenden Nachlieferung ebenfalls auf Null ab. Als Folge kann nach dem Einschwingen der Stickoxidkonzentation in der 2. Kammer gegen den Wert Null der Nullwert des Signals ermittelt werden. Dies ist das mit 2 bezeichnete Niveau in Fig. 3b.

Anschließend wird die an der ersten Kammer wirkende Pumpspannung auf den niedrigeren Wert U_{IPE_L} umgesteuert.

Nach dem Einschwingen des Signals bei der niedrigeren Spannung kann der Nullwert behaftete Signalwert (Niveau 1) erfasst werden.

Die Subtraktion von Nullwert behaftetem Signalwert und vorhergegangenem Nullwert im Steuerchip 2.16 ergibt den auszugebenden unverfälschten Signalwert, mit dem beispielsweise Stellgrößen für den Betrieb eines Verbrennungsmotors gebildet werden. Diese Verwendung des erfindungsgemäß gebildeten NOx-Signals wird durch Block 2.17 repräsentiert.

Ein weiteres Ausführungsbeispiel offenbart eine Möglichkeit, impulsförmige Störungen im NOx-Signal, die aus hochfrequenten Einkopplungen stammen, stark zu reduzieren.

Dieses Ausführungsbeispiel stellt gewissermaßen einen Gültigkeittest für die abgetasteten Signalwerte dar. Es wird mit Blick auf Figur 3 erläutert. Dabei werden nur die Signalwerte als gültig angesehen, die keine große Änderungsgeschwindigkeit besitzen. Dadurch werden insbesondere die impulsförmigen Reaktionen des NOx-Signals auf einen Niveau-Wechsel der Pumpspannung ausgeblendet.

Es sei t=0 der Zeitpunkt des ersten Wechsels von U_{IPE_H} nach U_{IPE_L} (Vergleiche Fig. 3a). Nach der Zeit t_{H} erfolgt dann das Rückschalten von U_{IPE_L} nach U_{IPE_H} und nach t_{L} wieder umgekehrt. Nach der Zeit t_{H1}>t_{H} wird aus dem Stickoxidsignal der Auswerteschaltung eine erste Stichprobe genommen. Die Messwertentnahme wird in Fig. 3c durch die Impulse repräsentiert. Weitere können nach t_{H2}, t_{H3}, ...t_{Hn} folgen. Bei der Entnahme mehrerer Stichproben kann die Differenz zweier auf einander folgender Stichproben zur Zeit t_{Hi} und t_{Hi+1} als Maß zur Beurteilung des Einschwingverhaltens verwendet werden. Ist die Differenz U_{H}, U_{L}, die in Fig. 3d dargestellt ist, klein genug, werden die Stichprobenwerte als gültig angenommen. Die obere Linie in Fig. 3d zeigt den Abtast-Halte-Signalverlauf für die Phasen mit niedriger Pumpspannung. Sie entspricht damit dem NOx-Signal mit dem Nullwert. Die untere Linie entspricht dem Abtast-Halte-Signalverlauf für die Phasen mit hoher Pumpspannung, die den Nullwert des NOx-Signals liefern.

Signalstörungen, die sprunghafte Veränderungen mit sich bringen, werden durch diesen Gültigkeitstest stark reduziert.

Aus den gültigen Werten kann durch Mittelwertbildung der endgültig Nullwert gebildet werden.

Ebenso wird für den Zeitraum t_{H}<t<t_{L} verfahren, nur erhält man statt der Nullwerte zu den Zeiten t_{Lm}>t_{Lm-1}...>t_{L2}>t_{L1}>t_{L} die um die Nullwerte verschobenen Signalgrößen.

Auch aus den gültigen Signalgrößen lässt sich durch Mittelwertbildung der endgültig Nullwert behaftete Signalwert bilden.

Die Subtraktion von Nullwert behaftetem Signalwert und vorhergegangenem Nullwert ergibt den auszugebenden unverfälschten Signalwert.

Neben der Mittelwertsbildung aus den gültigen Signalgrößen (Nullwerten) sind auch andere mathematische Funktionen denkbar, die eine(n) endgültige(n) Signalgröße (Nullwert) generieren lassen, z.B. gewichtete Summen.

## Patentansprüche

1. Verfahren zur Ermittlung der Konzentration einer sauerstoffhaltigen Verbindung in einem Meßgas in einem externen Volumen, das auch weiteren Sauerstoff enthält, mit einem Sensor mit einer ersten Kammer (2), die mit dem externen Volumen über eine erste Diffusionsbarriere (5) verbunden ist, und mit einer zweiten Kammer (3), die mit der ersten Kammer über eine weitere Diffusionsbarriere (6) verbunden ist,
mit Mitteln (7, 11, 2.1, 2.2, 2.10, 2.11, 2.13) zur Verringerung der Sauerstoffkonzentration in der ersten Kammer
und mit Mitteln (2.12, 2.16) zur Erfassung der Konzentration von Sauerstoff in der zweiten Kammer,
**dadurch gekennzeichnet,** das
die Verringerung der Sauerstoffkonzentration in der ersten Kammer in einer ersten Phase auf einen Wert erfolgt, bei dem eine Veränderung der Konzentration der sauerstoffhaltigen Verbindung nicht eintritt
und dass in einer zweiten Phase in der ersten Kammer eine weitere Verringerung auf einen Wert erfolgt, bei dem auch eine Verringerung der Konzentration der 1. sauerstoffhaltigen Verbindung eintritt
und wobei das genannte Maß für die gesuchte Konzentration als Differenz der in der 1. und 2. Phase in der zweiten Kammer erfassten Sauerstoffkonzentrationen gebildet wird.

2. Verfahren nach Anspruch 1, **dadurch gekennzeichnet, dass** die Mittel zur Verringerung der Sauerstoffkonzentration in der ersten Kammer einen Festelektrolyten umfassen, der zwischen 2 Elektroden angeordnet ist, an denen eine Spannung anliegt.

3. Verfahren nach Anspruch 2, **dadurch gekennzeichnet, dass** die an den genannten Elektroden anliegende Spannung in der zweiten Phase höher ist als in der ersten Phase.

4. Verfahren nach einem der vorhergehenden Ansprüche, **dadurch gekennzeichnet**, das die Mittel zur Erfassung der Konzentration von Sauerstoff in der zweiten Kammer eine Gaserzeugungselektrode zur Erzeugung oxidierbarer Gase enthalten.

5. Verfahren nach einem der Ansprüche 1 bis 3, **dadurch gekennzeichnet, daß** die Mittel zur Erfassung der Konzentration von Sauerstoff in der zweiten Kammer zwei Elektroden (8, 9) enthalten, von denen die eine (8) die Zersetzung von Sauerstoff und die andere (9) die Zersetzung von Stickoxiden begünstigt.

6. Verfahren nach einem der vorhergehenden Ansprüche, **gekennzeichnet durch** das Abgas eines Verbrennungsprozesses als Meßgas.

7. Verfahren nach einem der vorhergehenden Ansprüche, **gekennzeichnet durch** Stickoxide als bestimmte sauerstoffhaltige Verbindung, deren Konzentration erfaßt werden soll.

8. Vorrichtung zur Ermittlung der Konzentration einer sauerstoffhaltigen Verbindung in einem Meßgas in einem externen Volumen, das auch weiteren Sauerstoff enthält, , mit einem Sensor mit einer ersten Kammer (2), die mit dem externen Volumen über eine erste Diffusionsbarriere (5) verbunden ist, und mit einer zweiten Kammer (3), die mit der ersten Kammer über eine weitere Diffusionsbarriere (6) verbunden ist, mit Mitteln (7, 11, 2.1, 2.2, 2.10, 2.11, 2.13) zur Verringerung der Sauerstoffkonzentration in der ersten Kammer und mit Mitteln (2.12, 2.16) zur Erfassung der Konzentration von Sauerstoff in der zweiten Kammer,
**dadurch gekennzeichnet**, das
die Mittel zur Verringerung der Sauerstoffkonzentration in der ersten Kammer die Sauerstoffkonzentration in einer ersten Phase auf einen Wert verringern, bei dem eine Veränderung der Konzentration der sauerstoffhaltigen Verbindung nicht eintritt und dass sie die Sauerstoffkonzentration in der ersten Kammer in einer zweiten Phase weiter auf einen Wert verringern, bei dem auch eine Verringerung der Konzentration der 1. sauerstoffhaltigen Verbindung eintritt
und Mittel (2.16), die das genannte Maß für die gesuchte Konzentration als Differenz der in der 1. und 2. Phase in der zweiten Kammer erfassten Sauerstoffkonzentrationen bilden.

## Claims

1. Method for determining the concentration of an oxygen compound in a measurement gas in an external volume which also contains further oxygen, with a sensor having a first chamber (2) which is connected to the external volume through a first diffusion barrier (5), and having a second chamber (3) which is connected to the first chamber through a further diffusion barrier (6),
having means (7, 11, 2.1, 2.2, 2.10, 2.11, 2.13) for reducing the oxygen concentration in the first chamber and having means (2.12, 2.16) for recording the concentration of oxygen in the second chamber,
**characterized in that**
the reduction of the oxygen concentration in the first chamber is carried out in a first phase to a value at which no change in the concentration of the oxygen compound occurs,
and **in that** a further reduction in the first chamber is carried out in a second phase, to a value at which a decrease in the concentration of the 1^{st} oxygen compound also occurs,
and wherein the said measure of the desired concentration is formed as the difference between the oxygen concentrations recorded in the second chamber in the 1^{st} and 2^{nd} phases.

2. Method according to Claim 1, **characterized in that** the means for reducing the oxygen concentration in the first chamber comprise a solid electrolyte, which is arranged between 2 electrodes to which a voltage is applied.

3. Method according to Claim 2, **characterized in that** the voltage applied to the said electrodes is higher in the second phase than in the first phase.

4. Method according to one of the preceding claims, **characterized in that** the means for recording the concentration of oxygen in the second chamber contain a gas generation electrode for generating oxidizable gases.

5. Method according to one of Claims 1 to 3, **characterized in that** the means for recording the concentration of oxygen in the second chamber contain two electrodes (8, 9), one of which (8) promotes the decomposition of oxygen and the other (9) promotes the decomposition of nitrogen oxides.

6. Method according to one of the preceding claims, **characterized by** the exhaust gas of a combustion process as the measurement gas.

7. Method according to one of the preceding claims, **characterized by** nitrogen oxides as a particular oxygen compound, the concentration of which is intended to be recorded.

8. Device for determining the concentration of an oxygen compound in a measurement gas in an external volume which also contains further oxygen, having a sensor with a first chamber (2) which is connected to the external volume through a first diffusion barrier (5), and with a second chamber (3) which is connected to the first chamber through a further diffusion barrier (6), having means (7, 11, 2.1, 2.2, 2.10, 2.11, 2.13) for reducing the oxygen concentration in the first chamber and having means (2.12, 2.16) for recording the concentration of oxygen in the second chamber,
**characterized in that**
the means for reducing the oxygen concentration in the first chamber reduce the oxygen concentration in a first phase to a value at which no change in the concentration of the oxygen compound occurs, and **in that** they reduce the oxygen concentration in the first chamber in a second phase to a value at which a decrease in the concentration of the 1^{st} oxygen compound also occurs,
and means (2.16) which form the said measure of the desired concentration as the difference between the oxygen concentrations recorded in the second chamber in the 1^{st} and 2^{nd} phases.

## Revendications

1. Procédé de détermination de la concentration d'un composé oxygéné dans un gaz de mesure dans un volume externe, qui contient également de l'oxygène, avec
un détecteur comportant une première chambre (2), qui communique avec le volume externe au moyen d'une première barrière de diffusion (5), et une deuxième chambre (3), qui communique avec la première chambre au moyen d'une autre barrière de diffusion (6),
des moyens (7, 11, 2.1, 2.2, 2.10, 2.11, 2.13) pour réduire la concentration en oxygène dans la première chambre, et
des moyens (2.12, 2.16) pour détecter la concentration en oxygène dans la deuxième chambre,
**caractérisé en ce que**
on effectue la réduction de la concentration en oxygène dans la première chambre, dans une première phase, à une valeur à laquelle il ne se produit pas de variation de la concentration du composé oxygéné,
on effectue une réduction supplémentaire dans la première chambre, dans une deuxième phase, à une valeur à laquelle il se produit également une réduction de la concentration du premier composé oxygéné, et
on forme la mesure de la concentration recherchée comme étant la différence des concentrations en oxygène détectées dans la deuxième chambre dans la première phase et dans la deuxième phase.

2. Procédé selon la revendication 1,
**caractérisé en ce que**
les moyens pour réduire la concentration en oxygène dans la première chambre comprennent un électrolyte solide, qui est disposé entre deux électrodes auxquelles une tension est appliquée.

3. Procédé selon la revendication 2,
**caractérisé en ce que**
la tension appliquée aux électrodes est plus élevée dans la deuxième phase que dans la première phase.

4. Procédé selon l'une des revendications précédentes,
**caractérisé en ce que**
les moyens pour détecter la concentration en oxygène dans la deuxième chambre comprennent une électrode pour produire des gaz oxydables.

5. Procédé selon l'une des revendications 1 à 3,
**caractérisé en ce que**
les moyens pour détecter la concentration en oxygène dans la deuxième chambre comprennent deux électrodes (8, 9), dont l'une (8) favorise la décomposition de l'oxygène et dont l'autre (9) favorise la décomposition des oxydes d'azote.

6. Procédé selon l'une des revendications précédentes,
**caractérisé en ce que**
le gaz de mesure est le gaz d'échappement d'un processus de combustion.

7. Procédé selon l'une des revendications précédentes,
**caractérisé en ce que**
des oxydes d'azote constituent le composé déterminé contenant de l'oxygène, dont il faut détecter la concentration.

8. Dispositif de détermination de la concentration d'un composé oxygéné dans un gaz de mesure dans un volume externe, qui contient également de l'oxygène,
avec un détecteur comportant une première chambre (2), qui communique avec le volume externe au moyen d'une première barrière de diffusion (5), et une deuxième chambre (3), qui communique avec la première chambre au moyen d'une autre barrière de diffusion (6), avec des moyens (7, 11, 2.1, 2.2, 2.10, 2.11, 2.13) pour réduire la concentration en oxygène dans la première chambre et avec des moyens (2.12, 2.16) pour détecter la concentration en oxygène dans la deuxième chambre,
**caractérisé en ce que**
les moyens pour réduire la concentration en oxygène dans la première chambre réduisent la concentration en oxygène, dans une première phase, à une valeur à laquelle il ne se produit pas de variation de la concentration du composé oxygéné, et ils réduisent davantage la concentration en oxygène dans la première chambre, dans une deuxième phase, à une valeur à laquelle il se produit également une réduction de la concentration du premier composé oxygéné, et
des moyens (2.16) forment la mesure de la concentration recherchée comme étant la différence des concentrations en oxygène détectées dans la deuxième chambre dans la première phase et dans la deuxième phase.
